# EUROPEAN PATENT APPLICATION

(11) **EP 2 892 293 A1**
(43) Date of publication of application: **08.07.2015**
(21) Application number: 15151021.1
(22) Date of filing: 22.05.2009
(51) Int. Cl.: H04W 72/04

(54) **Radio communication system, base station apparatus, mobile station apparatus, and radio communication method in a radio communication system**

(62) Divisional of application: 09844868.1
(71) Applicant: FUJITSU LIMITED, Kawasaki-shi, Kanagawa 211-8588 (JP)
(72) Inventor: Hasegawa, Hajime, Kawasaki-shi, Kanagawa 211-8588 (JP)
(74) Representative: Reichl, Philipp

(57) **Abstract**

A radio communication system comprising a mobile station apparatus, a base station apparatus which performs radio communication with the mobile station apparatus, and an upper apparatus connected with the base station apparatus, wherein the upper apparatus includes a controller which couples each frequency band including a plurality of divided bandwidths allocated to the base station apparatus, allocate one frequency band for transmitting a common channel in the coupled frequency band, and generates a frequency coupling information related to the coupled frequency band, and a first transmitter which transmits the frequency coupling information to the base station apparatus, the base station apparatus includes a second transmitter which receives the frequency coupling information from the upper apparatus, and transmits the common channel to the mobile station apparatus based on the frequency coupling information, and the mobile station apparatus includes a receiver which receives the common channel.

## Description

### TECHNICAL FIELD

The embodiments discussed herein relate to a radio communication system, a base station apparatus, a mobile station apparatus, and a radio communication method for a radio communication system.

### BACKGROUND ART

Conventionally, there is a radio communication system using OFDM (Orthogonal Frequency Division Multiplexing) or the like. In such the radio communication system, a base station apparatus performs radio communication with a mobile station apparatus by using an allocated frequency band. Within the allocated frequency band, there is a frequency band for a common control channel (CCH), and the base station apparatus transmits broadcast information and the like by using the frequency band. Or, the base station apparatus may be allocated with a frequency band having a plurality of divided bandwidths. In this case, the common control channel is located within each frequency band (for example, Non-patent Documents 1 thorough 5 below).

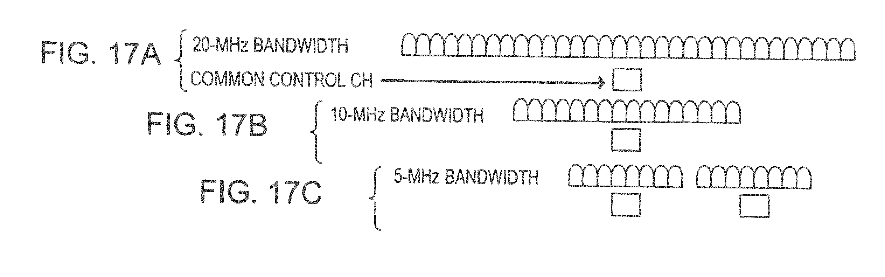

FIG. 17A through FIG. 17C illustrate an example of frequency bands allocated to the base station apparatus. As illustrated in FIG. 17A and 17B, a frequency band for the common control channel exists in a frequency bandwidth such as 20MHz bandwidth, 10MHz bandwidth, or the like. Or, as illustrated in FIG. 17C, if the frequency band having the plurality of divided bandwidths is allocated to the base station apparatus, the frequency band for the common control channel exists in each of the plurality of the divided bandwidths.

On the other hand, in recent days, there is a service called "MVNO"(Mobile Virtual Network Operator). The base station apparatus is shared by system lending and system borrowing companies, and the system borrowing party reduces costs for equipment investment.

Additionally, it is discussed that a base station including a means which manages frequency blocks, a means which determines scheduling information to allocate one or more resource blocks to a communication apparatus having a preferable channel condition for each frequency block, a means which generates control channel including scheduling information for each frequency block, and a means which multiplexes as frequency the control channel within a system frequency band and transmits by multi carrier (for example, Patent document 1 below).
Patent document 1: Japanese Laid-open Patent Publication No. 2007-221753
Non patent document 1: 3GPP TS 36.300
Non patent document 2: 3GPP TS 36.331
Non patent document 3: 3GPP TS 36.211
Non patent document 4: 3GPP TS 36.212
Non patent document 5: 3GPP TS 36.213

### DISCLOSURE OF THE INVENTION

### PROBLEMS TO BE SOLVED BY THE INVENTION

If the plurality of divided frequency bands are allocated to the base station apparatus, there exist the frequency band for the common control channel in each frequency band (for example, FIG. 17C) and a frequency band used for transmitting the user data becomes narrow.

Also, the frequency band for the common control channel is allocated in within each of the divided frequency blocks of the divided frequency bands as discussed in Japanese Laid-open Patent Publication No. 2007-221753, and the frequency band used for transmitting the user data becomes narrower by the band for the control channel.

Accordingly, it is an object in one aspect of the invention to provide a radio communication system, a base station apparatus, a mobile station apparatus, and a radio communication method in a radio communication system which can be maximization of a frequency band for transmitting or receiving user data.

### MEANS FOR SOLVING THE PROBLEM

According to an aspect of the invention, a radio communication system including: a mobile station apparatus; and a base station apparatus, wherein the mobile station apparatus and the base station apparatus perform radio communication, the base station apparatus includes: a first controller which couples each frequency band including a plurality of divided bandwidths allocated to the base station apparatus, and allocates one frequency band for transmitting a common channel in the coupled frequency band, and a first transmitter which transmits the common channel using by the allocated frequency band, and the mobile station includes a receiver which receives the common channel.

Furthermore, according to an aspect of the invention, a radio communication system including: a mobile station apparatus; a base station apparatus which performs radio communication with the mobile station apparatus; and an upper apparatus connected with the base station apparatus; wherein the upper apparatus includes: a controller which couples each frequency band including a plurality of divided bandwidths allocated to the base station apparatus, allocate one frequency band for transmitting a common channel in the coupled frequency band, and generates a frequency coupling information related to the coupled frequency band, and a first transmitter which transmits the frequency coupling information to the base station apparatus, the base station apparatus includes a second transmitter which receives the frequency coupling information from the upper apparatus, and transmits the common channel to the mobile station apparatus based on the frequency coupling information, and the mobile station apparatus includes a receiver which receives the common channel.

### EFFECTIVENESS OF THE INVENTION

A radio communication system, a base station apparatus, a mobile station apparatus, and a radio communication method in a radio communication system which can be maximization of a frequency band for transmitting or receiving user data are provided.

### BRIEF DESCRIPTION OF RRAWINGS

FIG. 1 is a diagram illustrating a configuration example of a radio communication system;
FIG. 2 is a diagram illustrating a configuration example of a base station apparatus;
FIG. 3 is a diagram illustrating a configuration example of a maintenance apparatus;
FIG. 4 is a diagram illustrating a configuration example of a mobile station apparatus;
FIG. 5 is a sequence diagram illustrating an operation example of the radio communication system;
FIG. 6 is a diagram illustrating a frequency coupling information;
FIG. 7 is a diagram illustrating frequency bands;
FIG. 8 is a diagram illustrating examples of transmission power values;
FIG. 9 is a diagram illustrating examples of transmission power values;
FIG. 10 is a flowchart for illustrating an operation example of the mobile station apparatus;
FIG. 11 is a diagram illustrating examples of the quality information;
FIG. 12 is a diagram illustrating examples of resource assignment;
FIG. 13 is a sequence diagram illustrating an operation example of the radio communication system;
FIG. 14 is a diagram illustrating an example of a message;
FIG. 15A is a sequence diagram illustrating an operation example of the mobile station apparatus;
FIG. 15B is a flowchart illustrating an operation example of the base station apparatus;
FIG. 16A is a flowchart illustrating an operation example of the mobile station apparatus;
FIG. 16B is a flowchart illustrating an operation example of the base station apparatus; and
FIGS. 17A through 17C are diagrams illustrating examples of frequency bands of the frequency to which the common control channel is assigned.

### BEST MODE FOR CARRYING OUT THE INVENTION

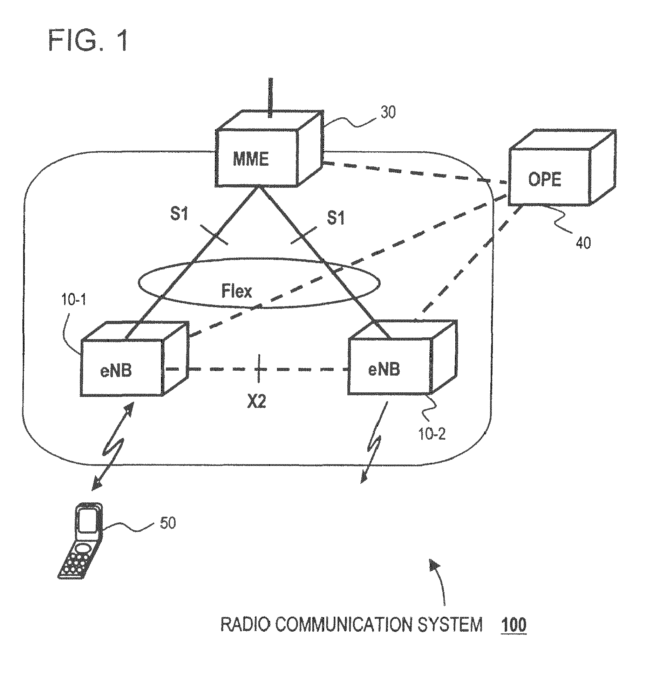

The embodiments to carry out the present invention will be explained. FIG. 1 illustrates configuration example of a radio communication system 100. The radio communication system 100 includes a base station apparatus (eNB: evolved Node B) 10-1, 10-2, a mobile station management node (or a mobile station management apparatus) (MME: Mobility Management Entity) 30, a maintenance apparatus (OPE) 40, and a mobile station apparatus (UE: User Equipment) 50.

The base station apparatuses 10-1, 10-2 perform radio communication with the mobile station apparatus 50. For example, the base station apparatuses 10-1, 10-2 generate broadcast information and transmit the broadcast information using by a broadcast control channel (BCCH: Broadcast Control Channel) to the mobile station apparatus 50. The details of the base station apparatuses 10-1, 10-2 will be explained below.

The mobile station management node 30 is a node for performing movement management, position registration, or the like of the mobile station apparatus 50, and is connected with each of the base station apparatuses 10-1, 10-2. The details of the mobile station management node 30 will be explained later.

The maintenance apparatus 40 is connected with the base station apparatuses 10-1, 10-2 and the mobile station management node 30, and performs various processes related to maintenance of the base station apparatuses 10-1, 10-2, or the like.

The mobile station apparatus 50 performs radio communication with the base station apparatuses 10-1, 10-2 in a communicative range of the base station apparatuses 10-1, 10-2. The details of the mobile station apparatus 50 will be explained below.

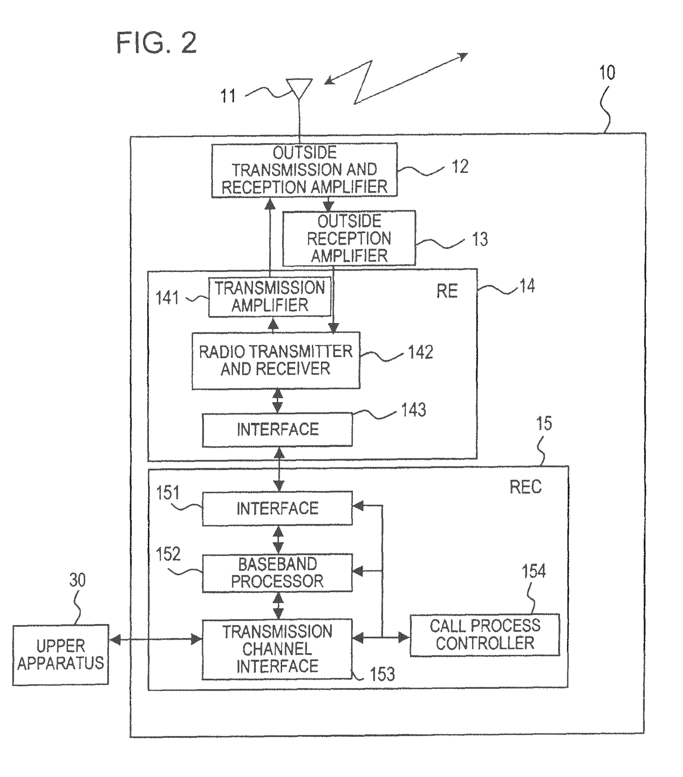

FIG. 2 illustrates a configuration example of the base station apparatus 10. The base station apparatus 10 includes an antenna 11, an outside transmission and reception amplifier 12, an outside reception amplifier 13, a radio equipment (RE) 14, and a radio equipment controller (REC) 15.

The antenna 11 transmits radio signals to and receives radio signals from the base station apparatus 10.

The outside transmission and reception amplifier 12 amplifies the radio signal from the radio equipment 14 and outputs the radio signal to the antenna 11. Also, the outside transmission and reception amplifier 12 amplifies the radio signal received by the antenna 11 and outputs the radio signal to the outside reception amplifier 13.

The outside reception amplifier 13 amplifies the radio signal output from the outside transmission and reception amplifier 12 and outputs the radio signal to the radio equipment 14.

The radio equipment 14 includes a transmission amplifier 141, a radio transmitter and receiver 142, and an interface 143.

The transmission amplifier 141 amplifies the radio signal output from the radio transmitter and receiver 142, and outputs the radio signal to the outside transmission and reception amplifier 12.

The radio transmitter and receiver 142 converts the radio signal output from the outside reception amplifier 13 into a baseband signal by performing various processes, and outputs the baseband signal to the interface 143. Also, the radio transmitter and receiver 142 converts the baseband signal output from the interface 143 into the radio signal by performing various processes, and outputs to the transmission amplifier 141.

The interface 143 converts the baseband signal output from the radio transmitter and receiver 142 into a signal in a format for being output to a connection line between the radio equipment 14 and the radio equipment controller 15 (for example, light signals, electrical signals, or the like), and outputs to the connection line. Also, the interface 143 converts the signal output from the connection line into the baseband signal and outputs to the radio transmitter and receiver 142.

The radio equipment controller 15 includes an interface 151, a baseband processor 152, a transmission path interface 153, and a call process controller 154.

The interface 151 converts the signal output from the connection line into the baseband signal and outputs to the baseband processor 152. Also, the interface 151 converts the baseband signal output from the baseband processor 152 into the signal in the format for being output to the connection line and outputs to the connection line.

The baseband processor 152 performs a modulation process and the like to a user data output from the transmission path interface 153, converts into the baseband signal, and outputs to the interface 151. Also, the baseband processor 152 performs a demodulation process and the like to the baseband signal output from the interface 151, extracts the user data, and outputs to the transmission path interface 153.

The transmission path interface 153 is an interface for transmitting and receiving data, messages, or the like with an upper apparatus (for example, the mobile station management node 30).

The call process controller 154 performs management of the radio channel to the mobile station apparatus 50, management of physical line to the upper apparatus, and various quality managements. Also, the call process controller 154 performs a resource allocation such as frequency allocation or the like to the mobile station apparatus 50 based on a quality information or the like transmitted from the mobile station apparatus 50. Additionally, for example, the call process controller 154 generates a frequency coupling information on receiving a frequency coupling message from the upper apparatus, and outputs to the baseband processor 152. Details of the frequency coupling information will be explained below. Further, the call process controller 154 generates a broadcast information for the mobile station apparatus 50, and outputs to the baseband processor 152. The baseband processor 152 performs modulation and the like to the broadcast information, and performs processing so that the broadcast information is transmitted to the mobile station apparatus 50 by using a BCCH (Broadcast Control Channel: the broadcast control channel), for example. For example, the frequency coupling information is included within the broadcast information, and is transmitted to the mobile station apparatus 50.

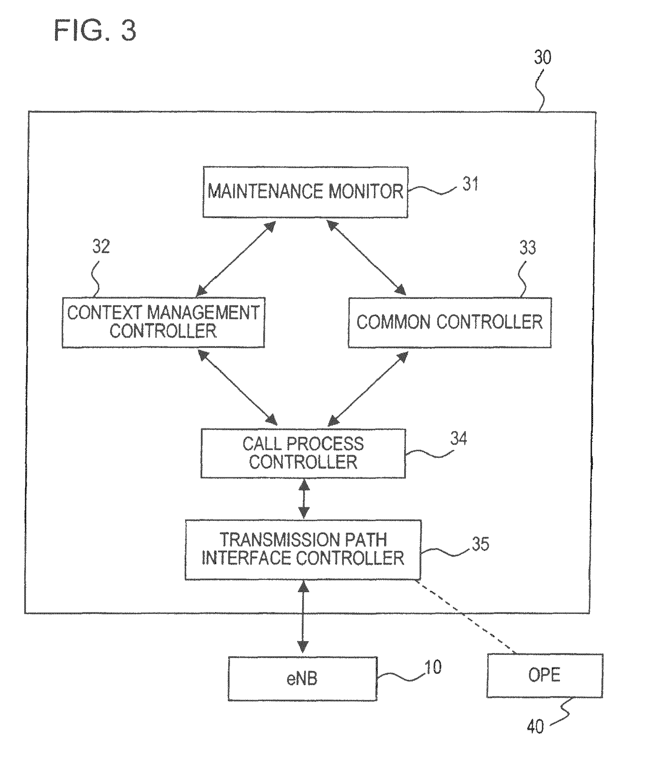

FIG. 3 illustrates a configuration example of the mobile station management node 30. The mobile station management node 30 includes a maintenance monitor 31, a context management controller 32, a common controller 33, a call process controller 34, and a transmission path interface controller 35.

The maintenance monitor 31 monitors the condition of the mobile station management node 30, and performs a process of warning or the like in case of a disconnection condition of the line to the base station apparatus 10, or a condition of which the mobile station management node 30 can not operate, for example.

The context management controller 32 holds and maintains identification information of the user, such as telephone number of the mobile station apparatus 50 or the like.

The common controller 33 controls the entire mobile station management node 30, and outputs the user data transmitted from the mobile station apparatus 50 and input via the call process controller 34 or the like, to an upper network. Also, the common controller 33 transmits the user data from the upper network to the base station apparatus 10 via the call process controller 34 and the transmission path interface controller 35.

The call process controller 34 performs call connection with the mobile station apparatus 50, and performs how to connect with the mobile station apparatus 50, identification of the data (packet) or the like from the mobile station apparatus 50, or the like.

The transmission path interface controller 35 performs line control of the transmission path to the base station apparatus 10. For example, the transmission path interface controller 35 performs line control of an S1 interface.

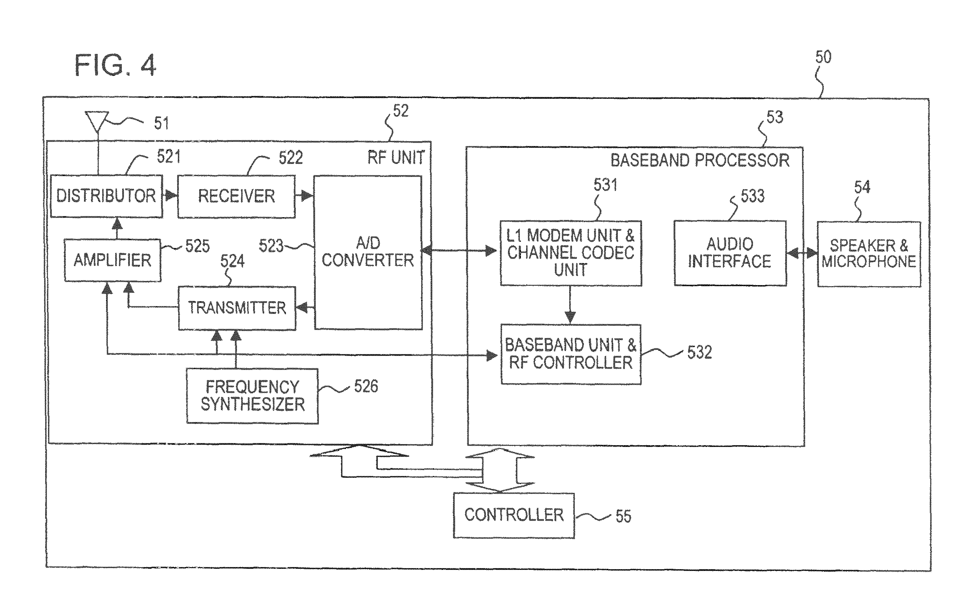

FIG. 4 illustrates a configuration example of the mobile station apparatus 50. The mobile station apparatus 50 includes an antenna 51, a RF (Radio Frequency) unit 52, a baseband processor 53, a speaker & microphone (hereinafter, refereed to as a speaker) 54, and a controller 55.

The antenna 51 transmits radio signal to the base station apparatus 10, and receives the radio signal transmitted from the base station apparatus 10.

The RF unit includes a distributor 521, a receiver 522, an A/D converter 523, a transmitter 524, an amplifier 525, and a frequency synthesizer 526.

The distributor 521 divides the radio signal, for example, outputs the radio signal output from the amplifier 525 to the antenna 51, and outputs the radio signal received by the antenna 51 to the receiver 522.

The receiver 522 performs various processes to the radio signal output form the distributor 521, and outputs to the A/D converter 523.

The A/D converter 523 converts the output from the receiver 522 into digital data, and outputs to the baseband processor 53. Also, the A/D converter 523 converts the data and the like output from the baseband processor 53 into analog data, and outputs to the transmitter 524.

The transmitter 524 performs frequency conversion or the like of the digital signal output from the A/D converter 523 so that the digital signal has a frequency corresponding to the oscillation frequency from the frequency synthesizer 526, and outputs the digital signal as the radio signal to the amplifier 525.

The amplifier 525 amplifies the radio signal from the transmitter 524 and the output from the baseband processor 53, and outputs to the distributor 521.

The baseband processor 53 includes L1 modem unit & channel codec unit (refereed to as an L1 modem unit, hereinafter) 531, a baseband unit & RF controller (refereed to as a baseband unit, hereinafter) 532, and an audio interface 533.

The L1 modem unit 531 includes function of a layer 1 modem, for example, performs demodulation process to the user data from the A/D converter 523, and outputs to the baseband unit 532. Also, the L1 modem unit 531 extracts the broadcast information transmitted from the base station apparatus 10 by using BCCH, from the output of the A/D converter 523, and outputs to the controller 55.

The baseband unit 532 performs various process such as demodulation processes or the like, to output data or the like output from the L1 modem unit 531, and outputs the processed data to other processing unit. Also, the baseband unit 532 performs modulation process to the user data output from the audio interface 533 or the like, and outputs to the amplifier 525.

The audio interface 533 is an interface to the speaker 54. For example, the audio interface 533 outputs audio data from the speaker 54 to the baseband unit 532, and outputs audio data output from the baseband unit 532 to the speaker 54.

The speaker 54 outputs audio based on the audio data, and inputs the audio and outputs the audio data.

The controller 55 controls the distributor 521 and the like of the RF unit 52 and the L1 modem unit 531 and the like of the baseband processor 53. The controller 55 performs management of the radio channel, quality management, or the like, for example, inputs from the L1 modem unit 531 the broadcast information including the frequency coupling information transmitted from the base station apparatus 10, and performs quality determination or the like base on the allocated frequency band or the like.

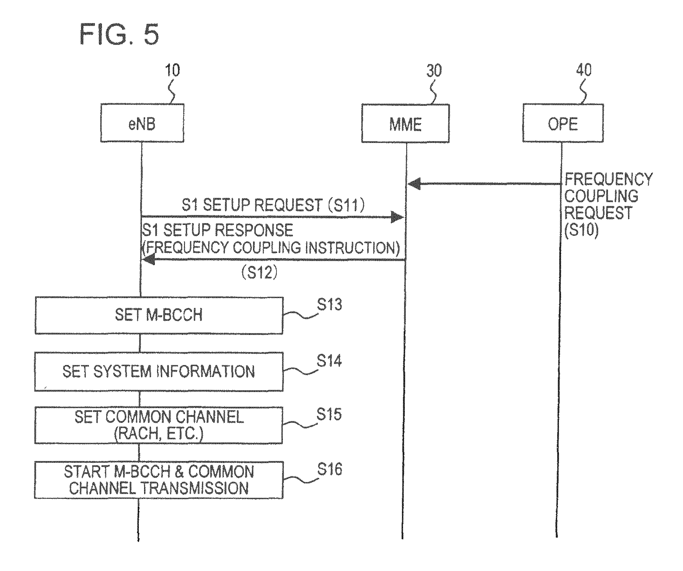

Next, an operation example of the radio communication system 100 will be explained. FIG. 5 illustrates an example of a sequence of the radio communication system 100. The maintenance apparatus 40 transmits a frequency coupling request to the mobile station management node 30(S10).

On the other hand, the base station apparatus 10 transmits a line setup request message (R1 Setup Request) to the mobile station management node 30 (S11). For example, the call process controller 154 of the base station apparatus 10 generates the set up request message and transmits to the mobile station management node 30 via the transmission path interface 153.

The mobile station management node 30 receives the frequency coupling request and the line setup request message, generates a response message (S1 Setup Response) to the line setup request, and transmits to the base station apparatus 10 (S12). For example, the call process controller 34 of the mobile station management node 30 receives the frequency coupling request from the maintenance apparatus 40 via the transmission path interface controller 35, and receives the setup request message from the base station apparatus 10, respectively. Then, the call process controller 34 generates the response message to the setup request message, and transmits to the base station apparatus 10 via the transmission path interface controller 35.

At this time, the mobile station management node 30 generates the response message including the frequency coupling instruction. For example, the call process controller 34 receives the frequency coupling request and the line setup request message, and generates the response message including the frequency coupling instruction.

The base station apparatus 10 receives the response message including the frequency coupling instruction and performs set of the broadcast information (BCCH) (S13). For example, the call process controller 154 receives the response message from the mobile station management node 30 via the transmission path interface 153, and determines what kind of information is transmitted as the broadcast information. For example, the call process controller 154 determines to include in the broadcast information position information of the base station apparatus 10, information of a neighbor base station, or the like.

Next, the base station apparatus 10 performs set of a system information included in the broadcast information (S14). For example, the call process controller 154 of the base station apparatus 10 generates, as the system information, identification information of the base station apparatus 10, identification information of the neighbor base station apparatus, or the like. At this time, for example, the call process controller 154 generates the frequency coupling information based on the frequency coupling instruction included in the response message.

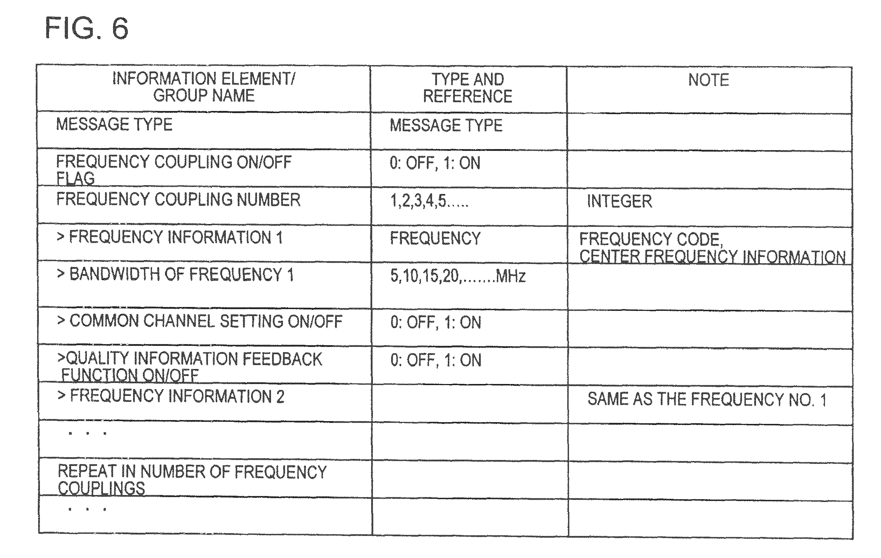

FIG. 6 illustrates an example of the frequency coupling information. As illustrated in FIG. 6, the frequency coupling information includes various kinds of parameters such as "frequency coupling ON/OFF flag", and "frequency coupling number", and the like. Among these, the parameters from the "frequency information" through the "quality information feedback function ON/OFF" are repeated as the frequency coupling number.

The base station apparatus 10 couples divided frequency band logically or virtually if the frequency band of a plurality of divided bandwidths is allocated, and allocates one frequency band for the common control channel(or the common channel) as the one frequency band. The frequency coupling information includes information of each of the coupled frequency bands, information of the common control channel, and the like.

In FIG. 6, the "frequency coupling ON/OFF flag" is a flag indicating whether or not there is a frequency coupling, for example, "1" indicates that there is a frequency coupling, and "0" indicates no frequency coupling.

The "frequency coupling number" indicates the number of the frequency to be coupled when there are frequency couplings.

The "frequency information" includes a frequency code indicating by coding which frequency band among the frequency bands(such as 1GHz band and 2GHz band) the frequency belongs to, and the center frequency information indicating the center of the frequency band, for each of the coupled frequencies.

The "frequency bandwidth" indicates the bandwidth (for example, 5,10,15MHz, or the like) of each of the coupled frequency bands.

The "common channel setting ON/OFF flag" is a flag indicating whether or not the common control channel is set up at each of the coupled frequencies. For example, when the flag is "0", it is indicated that the common control channel is not set within the frequency bands (OFF), and, when the flag is "1", it is indicated that the common control channel is set (ON).

The "quality information feedback function ON/OFF flag" is a flag indicating whether or not the mobile station apparatus 50 determines quality information at each of the coupled frequencies and feedbacks the result to the base station apparatus 10. For example, when the flag is "0", no feedback is indicated (OFF), and when the flag is "1", the feedback is indicated (ON).

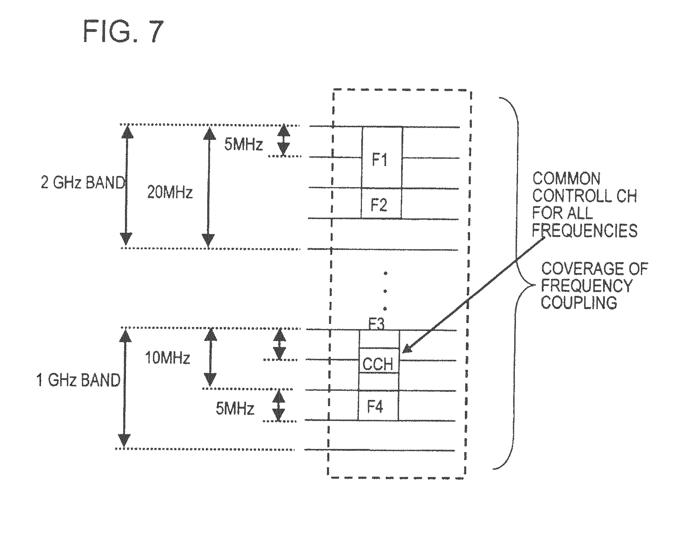

FIG. 7 illustrates an example of the frequency band coupled according to the frequency coupling information. FIG. 7 illustrates an example such that divided four frequency bands (F1 through F4) are logically or virtually coupled and the common control channel is set at the frequency band F3.

In the example of FIG. 7, the frequency coupling information (such as illustrated in FIG. 6) is explained as follows. The frequency coupling flag is ON (for example, "1"). The frequency coupling number is "4". As for the frequency F1, the frequency code indicates involvement within 2GHz band, and the frequency information indicates the center frequency of the 2GHz band. The bandwidth is "10MHz", and the common channel setting is OFF (for example, "0"). Also, as for the frequency F3, the frequency code indicates 1GHz band and the center frequency, the bandwidth is "10MHz", and the common channel setting is ON (for example, "1").

In general, since a low frequency band has less attenuation amount due to deterioration of the frequency component compared with a high frequency band, it is preferred that the commonly assigned common control channel is allocated to a low frequency band. For example, in the example of FIG. 7, if the frequency band F4 is the lower frequency band than the frequency band F3, it is preferred that the common control channel is allocated to the frequency band F4. Or, according to a system setting by a company such as a frequency assignment setting, the common control channel may be allocated to the high frequency band.

For example, the call process controller 154 of the base station apparatus 10 generates the frequency coupling information. The call process controller 154 stores, for example, information of the frequency band allocated to the base station apparatus 10, and can read out the information at this process and generate the frequency coupling information. Then, for example, the call process controller 154 generates the broadcast information including the frequency coupling information.

The base station apparatus 10 generates the broadcast information including the frequency coupling information (S14), and performs set of the common channel other than BCCH such as RACH (Random Access Channel) (S15). For example, the call process controller 154 of the base station apparatus 10 performs the set of the common channel.

Next, the base station apparatus 10 starts transmission of the broadcast information and the like (S16). For example, the call process controller 154 outputs the broadcast information including the frequency coupling information to the baseband processor 152. Then, the baseband processor 152 maps the broadcast information to the frequency band allocated the common controi channel based on the frequency coupling information. After that, the baseband processor 152 modulates or the like the broadcast information, and transmits to the mobile station apparatus 50 via the interface 151 and the like.

Here, the base station apparatus 10 may transmit the broadcast information, user data and the like at fixed the transmission power amount in each of the coupled frequency bands. However, the base station apparatus may transmit the data or the like at difference transmission amount in each of the coupled frequency bands, according to frequency characteristic of the each of the coupled frequency bands. In this case, the base station apparatus 10 may designate the transmission power amount for each of the coupled frequency bands and transmit at the transmission power amount the data and the like.

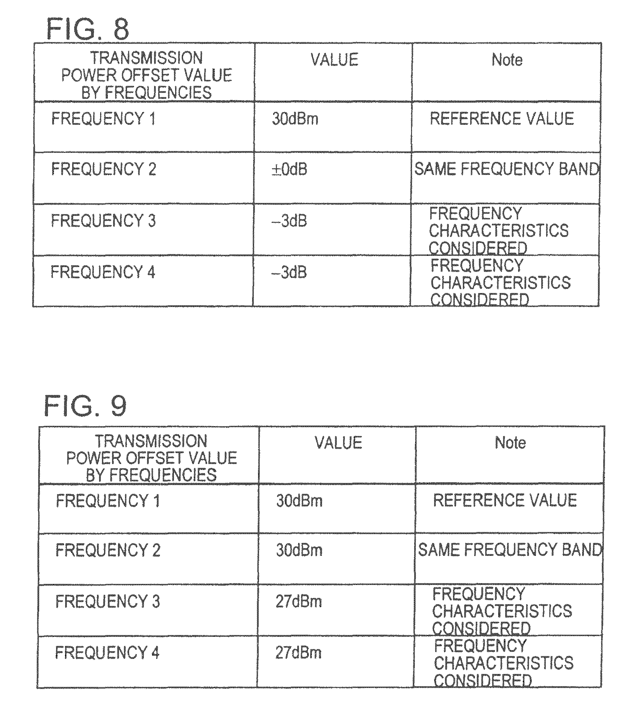

FIG. 8 illustrates an example of the transmission power value, such that, by the transmission power amount of a reference frequency (or the frequency band) being the reference value, the transmission power amounts of other frequencies are designated by the offset values (the relative values) to the reference value. In the example of FIG. 8, the transmission power amount of the frequency 1 is set as the reference value. The frequency 2 has, since it is in the same frequency band (2GHz range, 1GHz range, or the like) as the frequency 1, the offset value "0". Each transmission power amount of the frequencies 3,4 is "-3dB".

Also, FIG. 9 illustrates an example such that the transmission power amount of each frequency is designated by an absolute value. Each transmission power amount of the frequencies 1,2 is "30dBm", and each transmission power amount of the frequencies 3,4 is "27dBm".

For example, according to information about the frequency band assigned to the base station apparatus 10, the call process controller 154 of the base station apparatus 10 may generate an information about the transmission power amount with an absolute value or a relative value for each divided frequency band. When generating the information with the relative value, the call process controller 154 determines the transmission power amount of the frequency band to be referenced, and designates the transmission power amount of other frequency bands by differences from the reference value. Further, the call process controller 154 may include the generated information about the transmission power amount into the frequency coupling information (for example, in FIG. 6). The information about the transmission power amount is output via the baseband processor 152 to the radio transmitter and receiver 142. Then, the radio transmitter and receiver 142 performs the transmission control according to the transmission power amount. Or, the transmission amplifier 141 or the outside transmission and reception amplifier 12 may perform the transmission control according to the information about the transmission power amount.

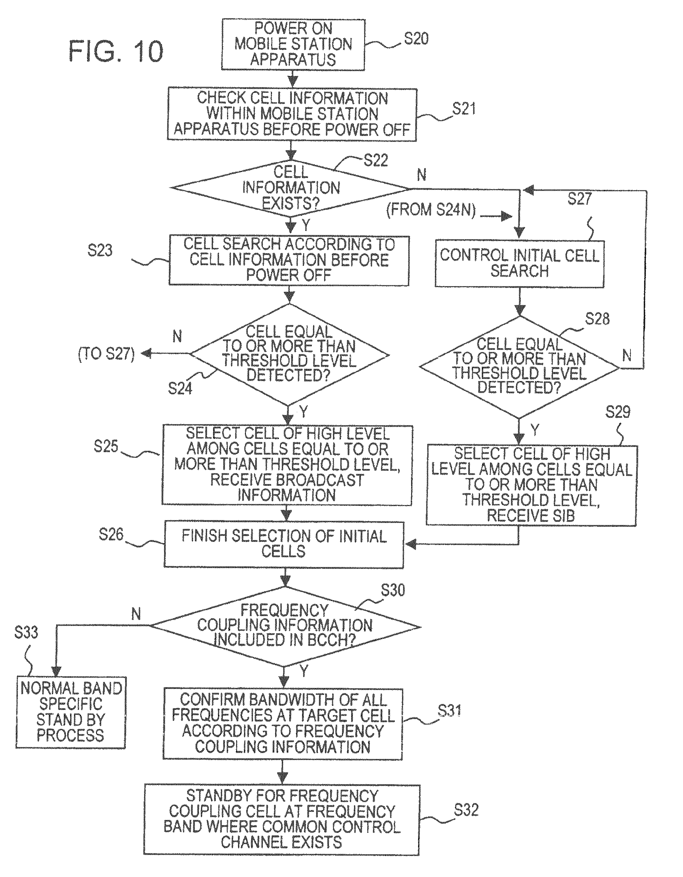

Next, operation of the mobile station apparatus 50 will be explained. FIG. 10 is a flow chart illustrating an example operation of the mobile station apparatus 50.

The mobile station apparatus 50 powers on (S20), and checks cell information within the mobile station apparatus 50 (or the base station information) before power off (S21). For example, the controller 55 of the mobile station apparatus 50 detects the power on, and reads out cell information stored in a memory within the controller 55.

Next, when there is the cell information ("Y" at S22), the mobile station apparatus 50 performs the cell search according to the cell information before power off (S23). For example, the controller 55 performs the cell search.

Next, the mobile station apparatus 50 receives pilot signal (or known signals) or the like transmitted from each of the base station apparatus 10 based on the cell information, determines the reception level, and detects a cell (or the base station apparatus) equal to or more than a threshold level (S24). For example, the controller 55 performs the reception level determination, the detection of the cell, and the like.

When the mobile station apparatus 50 detects cells of the level equal to or more than the threshold level ("Y" at S24), the mobile station apparatus 50 selects a highest level cell among the cells of the level equal to or more than the threshold level, and receives the broadcast information from the selected cell (S25). For example, the controller 55 controls the distributor 521, the receiver 522 and the like so as to select the highest level cell, and to receive the broadcast information from the selected cell.

Next, the mobile station apparatus 50 finishes selection of Initial Cells (S26), and determines whether or not the frequency is coupled based on to the frequency coupling information included in the received broadcast information (S30). For example, the L1 modem unit 531 extracts the broadcast information from the received signal and outputs to the controller 55, then the controller 55 checks whether or not the frequency coupling ON/OFF flag of the frequency coupling information is "ON".

If the frequency is coupled ("Y" at S30), the mobile station apparatus 50 reads out each parameter included in the frequency coupling information, and confirms the bandwidth of each of the coupled frequency bands, the entire frequency bandwidth, and the like of the base station apparatus 10 (S31). For example, if the frequency coupling ON/OFF flag is "ON", the controller 55 confirms the bandwidth of each frequency band, the bandwidth of the entire frequency band, and the like, according to other parameters of the frequency coupling information.

Then, the mobile station apparatus 50 performs the standby process for control signal or the like at the frequency band where the common control channel exists (S32). For example, the controller 55 confirms the frequency band of the common control channel based on the frequency coupling information, and controls the distributor 521, the receiver 522, and the like so that the standby process is performed at the frequency band.

On the other hand, if there is no cell information before power off after the power on ("N" at S22), the mobile station apparatus 50 performs an initial cell search (S27). For example, the controller 55 performs the initial cell search.

Next, the mobile station apparatus 50 detects the reception level of the pilot signal or the like from each base station apparatus 10 detected by the initial cell search, and determines whether or not there is a reception level equal to or more than the threshold level (S28).

Then, if the base station apparatus 10 equal to or more than the threshold level is detected ("Y" at S28), a cell having the highest reception level is selected from among the cells with reception levels equal to or more than the threshold level, and the broadcast information from the selected cell is received (S29). Then, the process at S26 will be performed.

Or, if the base station apparatus 10 equal to or more than the threshold level is not detected ("N" at S28), the mobile station apparatus 50 again performs the process of the step S27. The processes of the steps S27 through S29 are performed, for example, by the controller 55.

Further, if the cell equal to or more than the threshold level is not detected ("N" at S24), the mobile station apparatus 50 perform the process of the step S27.

Further, if the frequency is not coupled ("N" at S30), the mobile station apparatus 50 performs the normal stand by process at each divided frequency band (S33). For example, if the frequency ON/OFF flag of the frequency coupling information is "OFF", the controller 55 controls the distributor 521, the receiver 522, and the like, so that a normal stand by process is performed at each divided frequency band.

As such, the mobile station apparatus 50 receives from the base station apparatus 10 the broadcast information including the frequency coupling information, and can confirm the frequency region of a user channel (or the common channel) and the frequency region of the common channel based on the frequency coupling information.

Next, quality determination performed by the mobile station apparatus 50 will be explained. As explained above, the frequency coupling information includes the quality information feedback function ON/OFF flag in each of the coupled frequency bands. For example, the mobile station apparatus 50 may determine the communication quality at the frequency band, at which the flag of frequency coupling information is ON, among the frequency bands assigned to the mobile station apparatus 50. The mobile station apparatus 50 transmits the determined communication quality as quality information to the base station apparatus 10.

On the other hand, the base station apparatus 10 may allocate the radio resource to the mobile station apparatus 50 and further control the transmission power amount, based on the received quality information.

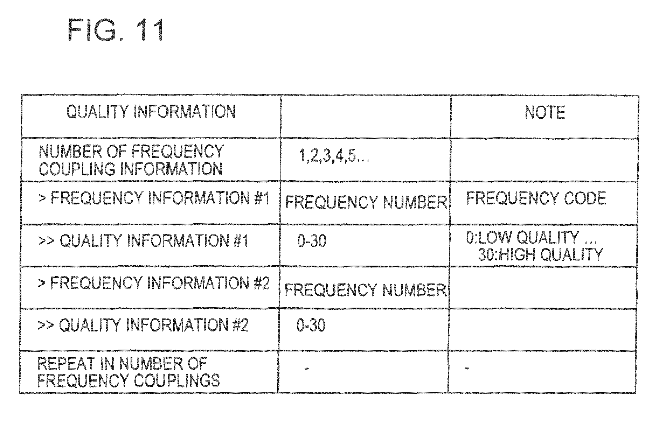

FIG. 11 illustrates an example of the quality information. The quality information includes parameters such as "frequency coupling information number", "frequency information" of each coupling of frequencies, and "quality information".

The "frequency coupling information number" indicates number of coupled frequency bands.

The "frequency information" indicates frequency code of frequency band (1GHz band, 2GHz band) to which each of coupled frequency bands belongs.

The "quality information" is quality information determined by the mobile station apparatus 50 indicating, for example, a CQI value.

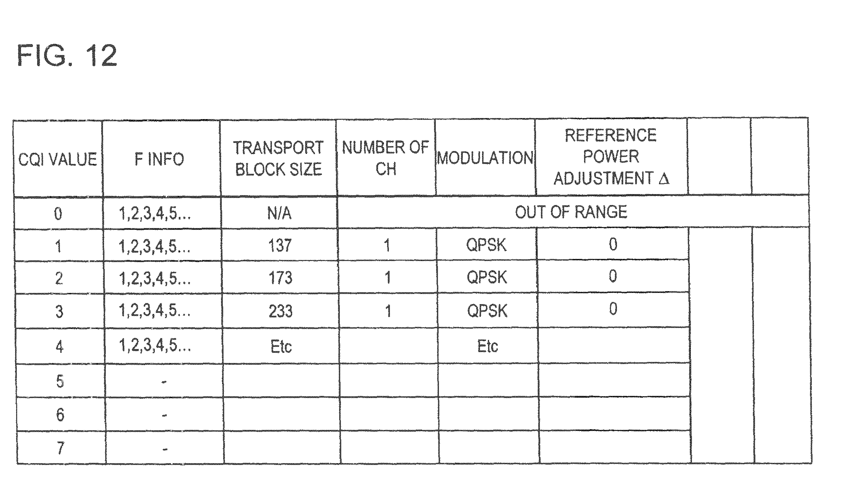

The base station apparatus 10 may perform allocation of various kinds of radio resources or the like according to the reported quality information. FIG. 12 illustrates a table of allocation example. For example, the table is held by the call process controller 154 of the base station apparatus 10, the baseband processor 152, or the like.

The table illustrated by FIG. 12 includes a fed back CQI value, the coupled frequency band number, a block size (number of bits) of a transport block including the user data or the like, number of allocated channels for each transport block, a modulation format, and an adjustment value for the transmission power.

For example, when the CQI value is "0" and the frequency coupling number is "2", the transport block is not allocated, and allocation of channel number or the like is not performed for being out of range. Or, when the CQI value is "3" and the frequency coupling number is "5", the block is allocated with the user bit of "233" bits of the transport block and the channel "1", and the modulation format is "QPSK".

Additionally, in the example illustrated by FIG. 12, the frequency coupling number for one CQI value indicates in any case the same block size or the like, however, for example, different block sizes or the like may be allocated to one CQI value according to the frequency coupling number being "1" or "2".

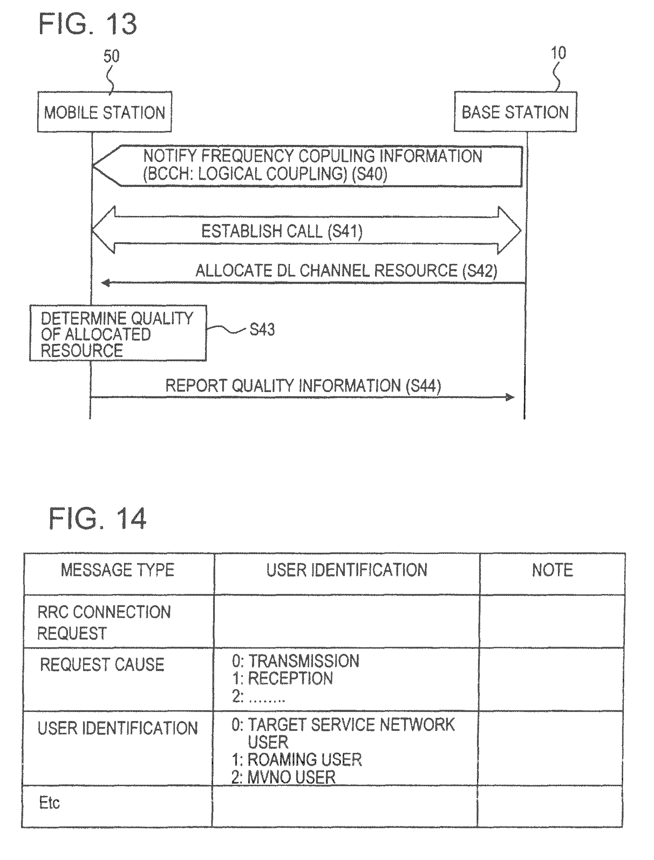

FIG. 13 illustrates an example of the sequence of quality report. The base station apparatus 10 notifies the frequency coupling information to the mobile station apparatus 50(S40).

Next, the base station apparatus 10 and the mobile station apparatus 50 establish the call by transmitting the data or the like to each other (S41).

Next, the base station apparatus 10 performs allocation of channel resource in DL direction, and transmits the allocation information (S42). For example, the call process controller 154 of the base station apparatus 10 and the controller 55 of the mobile station apparatus 50 perform a process for establishing the call. After establishing the call, the call process controller 154 performs allocation of the channel resource for transmitting the user data or the like to the mobile station apparatus 50, generates the allocation information, and transmits the information via the baseband processor 152 or the like to the mobile station apparatus 50.

Next, the mobile station apparatus 50 determines the quality of the allocated resource (S43). For example, the controller 55 of the mobile station apparatus 50 takes in the allocation information from the L1 modem unit 531 or the baseband unit 532, and determines the communication quality at the allocated frequency band. The allocated frequency band, for example, as with F1 through F4 or the like in FIG. 7, is included within all the coupled frequency bands. For example, the controller 55 determines the quality of the frequency band, of the allocated frequency bands, at which the quality the feedback information of the frequency coupling information is ON. The determination of the quality and the quality information (for example FIG. 11) is performed, for example, by the controller 55.

Next, the mobile station apparatus 50 transmits the determined quality information to the base station apparatus 10 (S44). For example, the controller 55 outputs the determined quality information to the baseband unit 532, and transmits the determined quality information via the amplifier 525 or the like to the base station apparatus 10.

Then, the base station apparatus 10 allocates various kinds of resources to the mobile station apparatus 50 according to the quality information (for example, FIG. 12). Also, when the communication quality of the frequency band F1 is less than the threshold value, the call process controller 154 may alternate the frequency band F1 with the frequency band F2. Thus, a flexible resource allocation is enabled.

Further, when measuring the communication quality, the mobile station apparatus 50 may determine, not the communication quality of the coupling of frequency bands, but the communication quality of each of the frequency regions (1GHz region, 2GHz region, or the like) to which each frequency band belongs. In this case, the mobile station apparatus 50 may transmit the communication quality information, in which the determined communication quality is a representative communication quality, to the base station apparatus 10.

Next, operation example at the time of performance of a MVNO will be explained. In the MVNO service, the system lender lends a part of the frequency band assigned to the base station apparatus 10 thereof to the system borrower. In this case, it is preferred to assign the frequency band for the common control channel at each of the frequency bands of the system lender and borrower. Hereinafter, example in such a case will be explained.

The mobile station apparatus 50 provided with the MVNO service and the other mobile station apparatus 50 (providing own service) are distinguished according to the user identification information (or user ID (identification)) of the mobile station apparatuses 50. The ID is, for example, an IMSI (International Mobile Subscriber Identity, or Subscriber Identifier), a TMSI (Temporally Mobile Subscriber Identify), an RNTI(Radio Network Temporary Identifier), or the like.

FIG. 14 illustrates the user ID. For example, as explained here, the user ID of "2" indicates a MVNO user, or, in the other cases, the user ID indicates other users than the MVNO user. For example, in establishing the call (S41 of FIG. 13), the mobile station apparatus 50 transmits the user ID with regard to the base station apparatus 10, and thereby the base station apparatus 10 distinguishes whether or not the mobile station apparatus 50 is provided with the MVNO service.

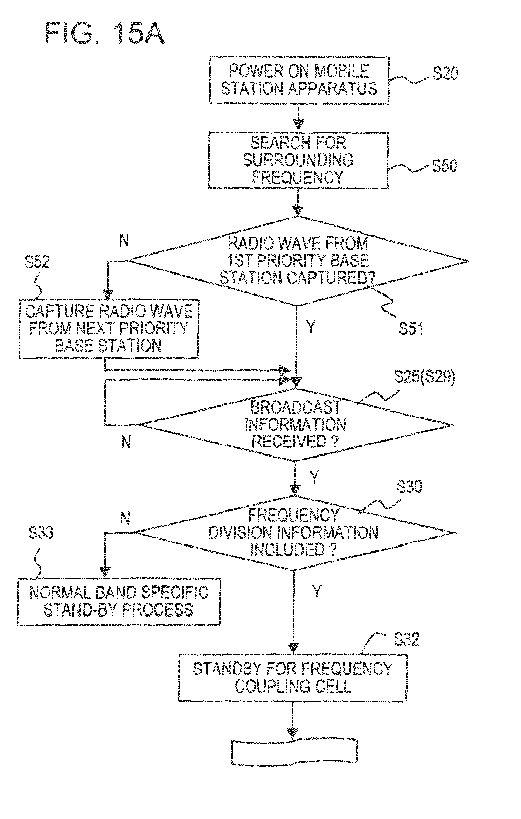

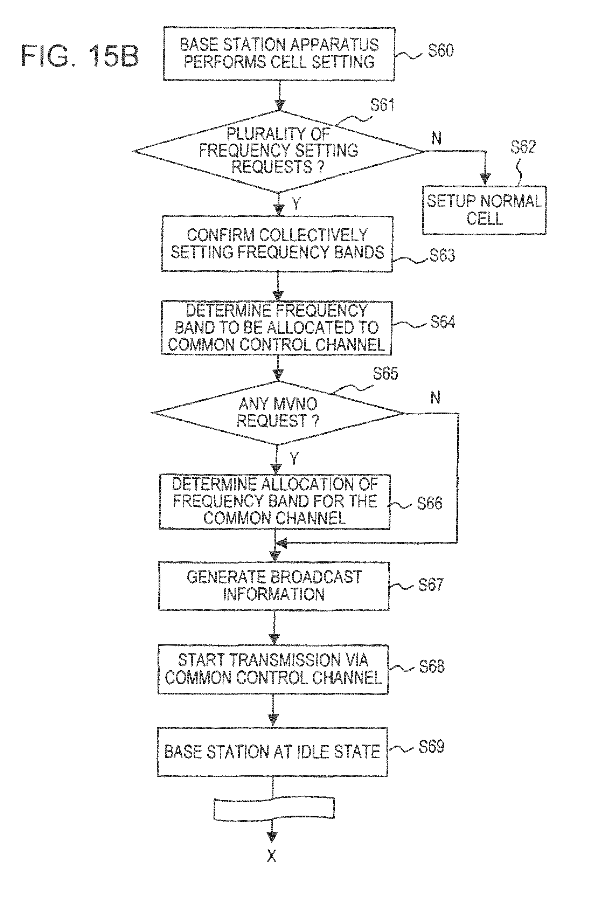

Next, operation example of the resource allocation in carrying out the MVNO will be explained. FIG. 15A is a flow chart illustrating operation example of the mobile station apparatus 50, and FIG. 15B is a flow chart illustrating operation example of the base station apparatus 10.

After power on(S20), the mobile station apparatus 50 searches for the frequency of the neighbor base station (S50), and, on capturing a radio wave from the first priority base station apparatus (Y at S51), determines whether or not the broadcast information is received (S25 (S29)).

On the other hand, when receiving no radio wave from the first priority base station apparatus (N at S51), the mobile station apparatus 50 captures the radio wave from the next priority base station apparatus (S52), and determines whether or not the broadcast information from the next priority base station apparatus is received (S25(S29)). Also, processes at S50 through S52 are the same as the processes at S21 through S24, and S27 through S28 and the like of FIG. 10. The subsequent processes are the same as those of FIG. 10, and explanations are omitted.

On the other hand, the base station apparatus 10 performs a cell setting (S60), and determines whether there are a plurality of frequency set requests (S61). For example, the call process controller 154 of the base station apparatus 10 performs the determination according to whether or not the frequency coupling request from the mobile station management node 30 is received.

When there are not a plurality of the frequency set requests (N at S61), the base station apparatus 10 performs setup processing of a normal cell (S62). For example, the base station apparatus 10, even being allocated with the frequency bands of a plurality of bandwidths, performs a process such as setting the common control channel at each frequency band.

On the other hand, if there is a request for setting a plurality of frequencies (Y at S61), the base station apparatus 10 confirms the frequency band to collectively set (to couple), and determines the frequency band to be allocated to the common control channel (S63, S64). For example, the call process controller 154 reads out the frequency band allocated to the base station apparatus 10, which is stored in a memory or the like within the call process controller 154, confirms the number of frequency bands and the frequency bands to be coupled, and determines the frequency band to be allocated to the common control channel. For example, the call process controller 154 couples the frequency bands F1 through F4 logically or virtually, and allocates the frequency band of the common control channel to a part of the frequency band F3 (see FIG. 7).

Next, the base station apparatus 10 determines whether or not there are any MVNO requests (S65). For example, the call process controller 154 makes the determination by checking whether or not the MVNO request is received from the mobile station management node 30 or the maintenance apparatus 40.

If there is the MVNO request (Y at S65), the base station apparatus 10 determines the allocation of frequency band for the common control channel (S66). For example, the call process controller 154 determines the assignment of the frequency band.

If the MVNO is carried out, for example, the system lending company lends out a part of the frequency band assigned to the system borrowing company. At this time, the system borrower sets the frequency band for the common control channel within the lent frequency band. In the above explained, the frequency bands F1 through F4 are coupled, the coupled frequency bands F1 through F2 are lent out, and the common control channel is set up at a part of the frequency bands F1 through F2.

On the other hand, if there is no MVNO request (N at S65), the base station apparatus 10 transits to the process at S67 without performing the process at S66. The reason for this is because, if there is no NVNO request, lending out a part of the coupled frequency bands is not performed.

After the determination of the assignment of the common control channel (S66), or when there is no NVNO request (N at S65), the base station apparatus 10 generates the broadcast information (S67), and starts transmitting the broadcast information or the like via the common control channel (S68). For example, the call process controller 154 generates the frequency coupling information on the basis of the coupled frequency bands (S63), the frequency band of the common control channel, or the like (S64, S66), and generates the broadcast information including the frequency coupling information. Further, the mobile station apparatus 50 receives the broadcast information and performs processes of S25 and thereafter.

Next, the base station apparatus 10 transits to an idle state (S69).

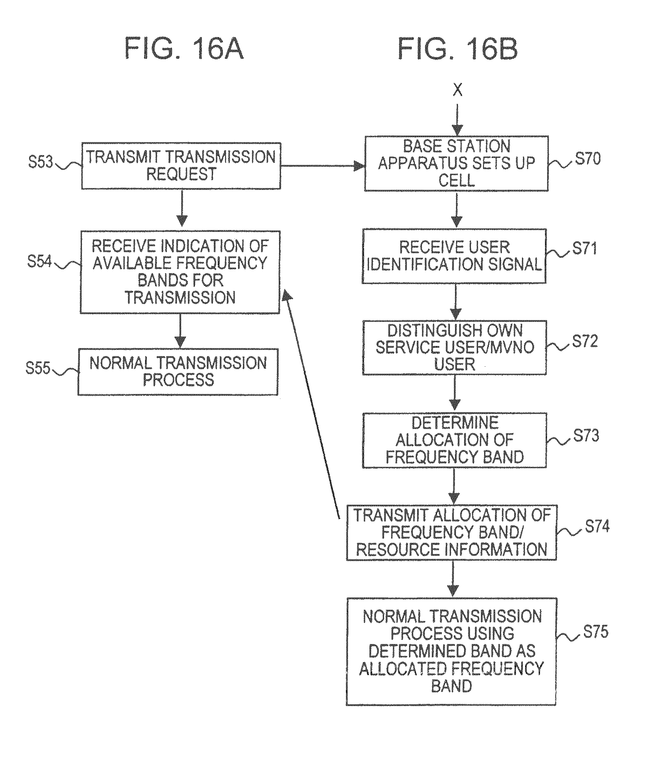

On the other hand, the mobile station apparatus 50, when performing a transmission, transmits a transmission request to the base station apparatus 10 (S53 of FIG. 16A). For example, the controller 55 of the mobile station apparatus 50 generates the transmission request, and by commanding the RF unit 52 to perform the transmission, the transmission request is transmitted.

When the base station apparatus 10 receives the transmission request (S70), the base station apparatus 10 performs setup of the cell (S70), and receives a user identification signal from the mobile station apparatus 50 (S71). For example, the controller 55 of the mobile station apparatus 50 generates the user ID indicating a MVNO user or a user of the service (for example, see FIG. 14), and outputs it to the baseband unit 531. The user ID is transmitted from the baseband unit 531 to the base station apparatus 10 via the amplifier 525 and the like. The base station apparatus 10 receives the user ID, and, for example, outputs the user ID to the call process controller 154 via the radio equipment 14 and the like.

Next, the base station apparatus 10 distinguishes the own service user or a MVNO user according to the received user ID (S72). For example, the call process controller 154 distinguishes the mobile station apparatus 50 to be the MVNO user in the case that the user identification information included in the user ID is "2", or to be the user of the service in other cases.

Next, the base station apparatus 10 determines the allocation of the frequency band for the mobile station apparatus 50 based on the distinguish result (S73), and transmits the resource information including the allocated frequency band (S74). In the case of the own service user, for example, a par of the frequency band determined at S63 is used as the allocated frequency band. Also, in the case of the MVNO user, the allocated frequency is a part of the frequency bands of the system lender or borrower determined at the process of S66. For example, the call process controller 154 determines the assigned frequency, and generates the resource information. The generated resource information is transmitted via the baseband processor 152 and the like to the mobile station apparatus 50.

Next, the base station apparatus 10 performs a normal transmission process such as transmission or reception of the user data and the like by using the allocated frequency (S75).

On the other hand, the mobile station apparatus 50 receives the resource information, and extracts information of the allocated frequency band from the resource information (S54). For example, the controller 55 takes in the resource information from the L1 modem unit 531 or the baseband unit 532, and extracts the information of the frequency band.

Next, the mobile station apparatus 50 performs the normai transmission process such as transmission or reception of the user data and the like by using the assigned frequency band (S55).

As explained above, the base station apparatus 10 logically or virtually couples frequency bands of a plurality of divided bandwidths, and allocates of the coupled frequency bands the frequency band to the common control channel (S14 of FIG. 5, FIG. 6, and the like). Thus, since the frequency band which is available for a common resource is commonly used, the frequency band used for transmission or reception of the user data is more broadened, comparing with a case in which the common control channel is allocated to each divided frequency band. Therefore, the radio communication system 100 maximizes the frequency band for transmitting or receiving the user data.

Also, if there is the MVNO request (Y at S65), for the coupled frequency band, the frequency band is divided to each of the system lending company and the system borrowing company. Then, for example, one frequency band (two, three, or more frequency bands) may be allocated to the frequency band of each system lending company for the common control channel (S66). Since the common control channel is assigned to each company, more frequency bands for the user data are reserved, comparing to a case in which a plurality of frequency bands are allocated to each company and the common control channel is allocated to each of the frequency bands. Therefore, the radio communication system 100 maximizes the frequency band for the user data even in the case of MVNO service.

Further, it is enabled to assign, within the system, whether there is the MVNO request or not, one or more frequency band(s) for common control channel to each frequency band of each of the coupled frequencies within the system. Thus, the company is enabled to allocate the common control channel to a plurality of targeted frequency bands for coupling in case that the load for the common control channel is high. Thus, according to each company's service object or a traffic status, the allocation of frequency band is flexibly performed.

Further, when the traffic for transmitting and receiving the user data increases more than expected, since maximization of the frequency band for the user data is carried out, each company is enabled to provide sufficient service to users within the own business.

Further, the mobile station apparatus 50 notifies the base station apparatus 10 of the communication quality with regard to each frequency band of the coupled frequency bands or to the frequency band to which each frequency band belongs. The base station apparatus 10 may allocate the mobile station apparatus 50 various kinds of resources such as frequency band, based on the communication quality in each of frequency bands or the like. Thus, the radio communication system 100 enables a flexible assignment of the resources.

Next, other examples will be explained.

In the above explained example, an explanation is made on the assumption that the call process controller 154 of the base station apparatus 10 generates the frequency coupling information (for example, FIG. 6). For example, the baseband processor 152 of the base station apparatus 10 may generate the information. For example, the call process controller 154 receives the message including the frequency coupling instruction from the mobile station management node 30, and outputs to the baseband processor 152 instruction for generating he frequency coupling information. The baseband processor 152 receives the frequency coupling information, and generates such the information.

Also, the frequency coupling information may be generated by the upper apparatus, such as the mobile station management node 30. For example, the mobile station management node 30 receives the frequency coupling request from the maintenance apparatus 40 (S10) and the request message for setting up the line from the base station apparatus 10 (S11), and generates the frequency coupling information. The mobile station management node 30 may include the frequency coupling information within the response message for setting up the line. For example the call process controller 34 of the mobile station management node 30, the common controller 33, or the like generates the frequency coupling information. If the call process controller 34 generates the information, the requests and messages from the maintenance apparatus 40 and the base station apparatus 10 are input into the call process controller 34 via the transmission path interface controller 35. The call process controller 34 holds information of the frequency band allocated to the base station apparatus 10, and generates the frequency coupling information based on the information of the frequency band on receiving the coupling request.

Further, the frequency coupling information may be generated by the upper apparatus, such as the maintenance apparatus 40. When transmitting the frequency coupling request to the mobile station management node 30, the maintenance apparatus 40 may generate the frequency coupling information and include it within the frequency coupling request.

Also, in the above explained example, an explanation is made on the assumption that the allocation of the frequency band for the common control channel is performed by the call process controller 154 of the base station apparatus 10. For example, the baseband processor 152 may perform allocation of the frequency band for the common control channel. In this case, for example, the call process controller 154 outputs the frequency coupling information, and the baseband processor 152 is enabled to perform the allocation of the frequency band based on the information.

Further, in the above description, an example is explained in the case of a sole system borrowing company performing the MVNO service. For example, there may be a plurality of the system lending companies. In such a case, coupled frequency band is divided into the number of the system lending companies, and the common channel is assigned to each divided frequency band.

### EXPLANATION OF REFERENCES

- 10 (10-1, 10-2):: base station apparatus (eNB)
- 12:: outside transmission and reception amplifier
- 13:: outside reception amplifier
- 14:: radio equipment (RE)
- 141:: transmission amplifier
- 142:: radio transmitter and receiver
- 143:: interface
- 15:: radio equipment controller
- 151:: interface
- 152:: baseband processor
- 153:: transmission path interface
- 154:: call process controller
- 30:: mobile station management node (MME)
- 33:: common controller
- 34:: call process controller
- 35:: transmission path interface controller
- 40:: maintenance apparatus (OPE)
- 50:: mobile station apparatus
- 52:: RF unit
- 53:: baseband processor
- 531:: L1 modem unit (L1 modem unit & channel codec unit)
- 532:: baseband unit (baseband unit & RF controller)
- 55:: controller

The invention may be better understood in the light of the following examples:
Example 1: A radio communication system comprising:
   a mobile station apparatus; and
   a base station apparatus, wherein
   the mobile station apparatus and the base station apparatus perform radio communication,
   the base station apparatus includes:
      a first controller which couples each frequency band including a plurality of divided bandwidths allocated to the base station apparatus, and allocates one frequency band for transmitting a common channel in the coupled frequency band, and
      a first transmitter which transmits the common channel using by the allocated frequency band, and
      the mobile station includes a receiver which receives the common channel.
Example 2: The radio communication system according to Example 1, wherein the mobile station apparatus further includes:
   a second controller which determines a communication quality with the base station apparatus on receiving the common channel, and
   a second transmitter which transmits the determined communication quality to the base station apparatus, and
   the first controller of the base station apparatus determines the frequency band to be allocated to the mobile station apparatus based on the communication quality received from the mobile station apparatus.
Example 3: The radio communication system according to Example 1, wherein
   the first controller generates a broadcast information including a frequency coupling information related to the coupled frequency band, and
   the first transmitter transmits the broadcast information to the mobile station apparatus, using by the frequency band for transmitting the common channel.
Example 4: The radio communication system according to Example 1, wherein
   the first controller designates a transmission power amount to each frequency band of the coupled frequency bands, and
   the first transmitter transmits an information or a data to the mobile station apparatus by each frequency band based on the designated transmission power amount.
Example 5: The radio communication system according to Example 1, wherein
   the first controller divides the coupled frequency band, and allocates the common channel to each of the divided frequency bands, on performing a MVNO service.
Example 6: The radio communication system according to Example 2, wherein
   the second controller of the mobile station apparatus determines a communication quality of each coupled frequency band, and
   the second transmitter of the mobile station apparatus transmits the communication quality of each coupled frequency band.
Example 7: The radio communication system according to Example 3, wherein
   the frequency coupling information includes a flag information indicating whether or not the frequency band is set for transmitting the common channel in each frequency band of the coupled frequency bands.
Example 8: The radio communication system according to Example 7, wherein
   the frequency coupling information includes a flag information indicating whether or not the divided frequency band is coupled, an information indicating a number of coupled frequency band, an information indicating a bandwidth of the coupled frequency band, and an information indicating whether or not the quality information is fed back to the base station apparatus.
Example 9: A radio communication system comprising:
   a mobile station apparatus;
   a base station apparatus which performs radio communication with the mobile station apparatus; and
   an upper apparatus connected with the base station apparatus, wherein the upper apparatus includes:
      a controller which couples each frequency band including a plurality of divided bandwidths allocated to the base station apparatus, allocate one frequency band for transmitting a common channel in the coupled frequency band, and generates a frequency coupling information related to the coupled frequency band, and
      a first transmitter which transmits the frequency coupling information to the base station apparatus,
   the base station apparatus includes a second transmitter which receives the frequency coupling information from the upper apparatus, and transmits the common channel to the mobile station apparatus based on the frequency coupling information, and
   the mobile station apparatus includes a receiver which receives the common channel.
Example 10: A base station apparatus for performing radio communication with a mobile station apparatus, the base station apparatus comprising:
   a controller which couples each frequency band including a plurality of divided bandwidths allocated to the base station apparatus and allocates one frequency band for transmitting a common channel in the coupled frequency band, and
   a transmitter which transmits the common channel by the frequency band.
Example 11. A base station apparatus for being connected with an upper apparatus and performing radio communication with a mobile station apparatus, the base station apparatus comprising:
   a receiver which receives from the upper apparatus a frequency coupling information related to a coupled frequency band, each frequency band including a plurality of divided bandwidths is allocated to the base station apparatus, the each frequency band is coupled, and one frequency band for transmitting a common channel is allocated in the coupled frequency band, and
   a transmitter which transmits the common channel to the mobile station apparatus based on the frequency coupling information.
Example 12: A mobile station apparatus for performing radio communication with a base station apparatus, the mobile station apparatus comprising:
   a receiver which receive a common channel transmitted by an allocated frequency band, each frequency band including a plurality of divided bandwidths is allocated to the base station apparatus, the each frequency band is coupled, and one frequency band for transmitting the common channel is allocated in the coupled frequency band.
Example 13: A mobile station apparatus for performing radio communication with a base station apparatus connected with an upper apparatus, the mobile station apparatus comprising:
   a receiver which receives a transmitted common channel from the base station apparatus, each frequency band including a plurality of divided bandwidths is allocated to the base station apparatus, the each frequency band is coupled, one frequency band for transmitting the common channel is allocated in the coupled frequency band, the common channel is transmitted from the base station apparatus received a frequency coupling information related to the coupled frequency band from the upper apparatus.
Example 14: A radio communication method in a radio communication system for performing radio communication between a mobile station apparatus and a base station apparatus, the method comprising:
   coupling each frequency band including a plurality of divided bandwidths allocated to the base station apparatus, and allocating one frequency band for transmitting a common channel in the coupled frequency band, by the base station apparatus;
   transmitting the common channel by the allocated frequency band, by the base station apparatus; and
   receiving the common channel, by the mobile station apparatus.
Example 15: A radio communication method in a radio communication system including a mobile station apparatus, a base station apparatus performing radio communication with the mobile station apparatus, and an upper apparatus connected to the base station apparatus, the method comprising:
   coupling each frequency band including a plurality of divided bandwidths allocated to the base station apparatus, allocating one frequency band for transmitting a common channel in the coupled frequency band, and generating a frequency coupling information related to the coupled frequency band, by the upper apparatus;
   transmitting the frequency coupling information to the base station apparatus, by the upper apparatus;
   receiving the frequency coupling information from the upper apparatus, and transmitting the common channel based on the frequency coupling information to the mobile station apparatus, by the base station apparatus; and
   receiving the common channel, by the mobile station apparatus.

## Claims

1. A radio communication system comprising:
a mobile station apparatus;
a base station apparatus which performs radio communication with the mobile station apparatus; and
an upper apparatus connected with the base station apparatus, wherein the upper apparatus includes:
a controller which couples each frequency band including a plurality of divided bandwidths allocated to the base station apparatus, allocate one frequency band for transmitting a common channel in the coupled frequency band, and generates a frequency coupling information related to the coupled frequency band, and
a first transmitter which transmits the frequency coupling information to the base station apparatus,
the base station apparatus includes a second transmitter which receives the frequency coupling information from the upper apparatus, and transmits the common channel to the mobile station apparatus based on the frequency coupling information, and
the mobile station apparatus includes a receiver which receives the common channel.

2. The radio communication system according to Claim 1, wherein the mobile station apparatus further includes:
a second controller which determines a communication quality with the base station apparatus on receiving the common channel, and
a second transmitter which transmits the determined communication quality to the base station apparatus, and
the controller of the upper apparatus determines the frequency band to be allocated to the mobile station apparatus based on the communication quality received from the mobile station apparatus.

3. The radio communication system according to Claim 2, wherein
the second controller of the mobile station apparatus determines a communication quality of each coupled frequency band, and
the second transmitter of the mobile station apparatus transmits the communication quality of each coupled frequency band.

4. The radio communication system according to Claim 1, wherein
the base station apparatus includes a first controller which generates a broadcast information including a frequency coupling information related to the coupled frequency band, and
the first transmitter transmits the broadcast information to the mobile station apparatus, using by the frequency band for transmitting the common channel.

5. The radio communication system according to Claim 4, wherein
the first controller designates a transmission power amount to each frequency band of the coupled frequency bands, and
the first transmitter transmits an information or a data to the mobile station apparatus by each frequency band based on the designated transmission power amount.

6. The radio communication system according to Claim 4 or 5, wherein
the frequency coupling information includes a flag information indicating whether or not the frequency band is set for transmitting the common channel in each frequency band of the coupled frequency bands.

7. The radio communication system according to Claim 6, wherein
the frequency coupling information includes a flag information indicating whether or not the divided frequency band is coupled, an information indicating a number of coupled frequency band, an information indicating a bandwidth of the coupled frequency band, and an information indicating whether or not the quality information is fed back to the base station apparatus.

8. The radio communication system according to Claim 1, wherein
the controller of the upper apparatus divides the coupled frequency band, and allocates the common channel to each of the divided frequency bands, on performing a MVNO service.

9. A base station apparatus for being connected with an upper apparatus and performing radio communication with a mobile station apparatus, the base station apparatus comprising:
a receiver which receives from the upper apparatus a frequency coupling information related to a coupled frequency band, each frequency band including a plurality of divided bandwidths is allocated to the base station apparatus, the each frequency band is coupled, and one frequency band for transmitting a common channel is allocated in the coupled frequency band, and
a transmitter which transmits the common channel to the mobile station apparatus based on the frequency coupling information.

10. A mobile station apparatus for performing radio communication with a base station apparatus connected with an upper apparatus, the mobile station apparatus comprising:
a receiver which receives a transmitted common channel from the base station apparatus, each frequency band including a plurality of divided bandwidths is allocated to the base station apparatus, the each frequency band is coupled, one frequency band for transmitting the common channel is allocated in the coupled frequency band, the common channel is transmitted from the base station apparatus received a frequency coupling information related to the coupled frequency band from the upper apparatus.

11. A radio communication method in a radio communication system including a mobile station apparatus, a base station apparatus performing radio communication with the mobile station apparatus, and an upper apparatus connected to the base station apparatus, the method comprising:
coupling each frequency band including a plurality of divided bandwidths allocated to the base station apparatus, allocating one frequency band for transmitting a common channel in the coupled frequency band, and generating a frequency coupling information related to the coupled frequency band, by the upper apparatus;
transmitting the frequency coupling information to the base station apparatus, by the upper apparatus;
receiving the frequency coupling information from the upper apparatus, and transmitting the common channel based on the frequency coupling information to the mobile station apparatus, by the base station apparatus; and
receiving the common channel, by the mobile station apparatus.
